# EUROPEAN PATENT SPECIFICATION

(11) **EP 0 527 861 B1**
(45) Date of publication and mention of the grant of the patent: **02.08.1995**
(21) Application number: 91909177.7
(22) Date of filing: 03.05.1991
(51) Int. Cl.: B60P 1/64, B60S 9/04

(54) **AN APPARATUS IN DEMOUNTABLE BODIES**
VORRICHTUNG FÜR ZERLEGBARE GEGENSTÄNDE
APPAREIL UTILISE DANS DES OBJETS DEMONTABLES

(30) Priority: 04.05.1990 SE 9001606
(43) Date of publication of application: 24.02.1993
(73) Proprietor: TRANSLINK AB, 831 31 Östersund (SE)
(72) Inventor: HENRIKSSON, Arne, S-312 72 Laholm (SE)
(74) Representative: Nilsson, Lennart
(86) International application number: SE9100316
(87) International publication number: WO9117065

(56) References cited:
- SE-B- 442 281
- US-A- 2 934 373
- US-A- 4 176 825

## Description

The present invention relates to an apparatus in accordance with the preamable of claim 1.

Demountable bodies are well-known throughout the entire transportation industry, and the use of demountable bodies makes for extremely rational goods handling. However, desires have been voiced in this art for simplifying the design and construction of prior art support leg arrangements, as exemplified in SE-B-442 281 with a view to facilitating operation of the support legs for the demountable body, and reducing the weight of such constructions without, to that end, foregoing any level of safety and reliability. By a weight reduction, it will, naturally, become possible to increase the permitted payload of the vehicle, which would be a matter of great expediency in the industry.

The object forming the basis of the present invention resides in the task of satisfying the above-outlined desiderata.

This task is solved according to the present invention in accordance with the characterising part of claim 1.

Employing the present invention will greatly facilitate handling of the support legs in a demountable body. Both folding-in and folding-out of the support legs will be facilitated, since the spring retaining the legs in the leg bracket cooperates in both the folding-in and folding-out operation. Moreover, the present invention makes for a considerable weight reduction of the entire construction as compared with prior art constructions, this without necessitating any reduction in the safety and reliability aspects. Furthermore, the present invention makes for a high degree of versatility and one and the same construction can be applied in connection with different corner box arrangements. In addition, the present invention makes possible removal of the whole of the leg construction proper after but a few minor and extremely simple manual operations. Since the present invention permits a considerable weight reduction, all adjustments and alterations can be carried out single-handed.

The present invention will now be described in greater detail hereinbelow with particular reference to the accompanying Drawings. Fig. 1 shows a schematic perspective view of a load carrier frame with crossbeams according to one embodiment of the present invention. Fig. 2 shows an end elevation of a crossbeam according to the present invention. Fig. 3 is a side elevation of a crossbeam according to the present invention. Fig. 4 is a top plan view of a crossbeam according to the present invention. Fig. 5 is a side elevation of a support leg according to the present invention in the folded-out position, the support leg being also intimated in the folded-in position.

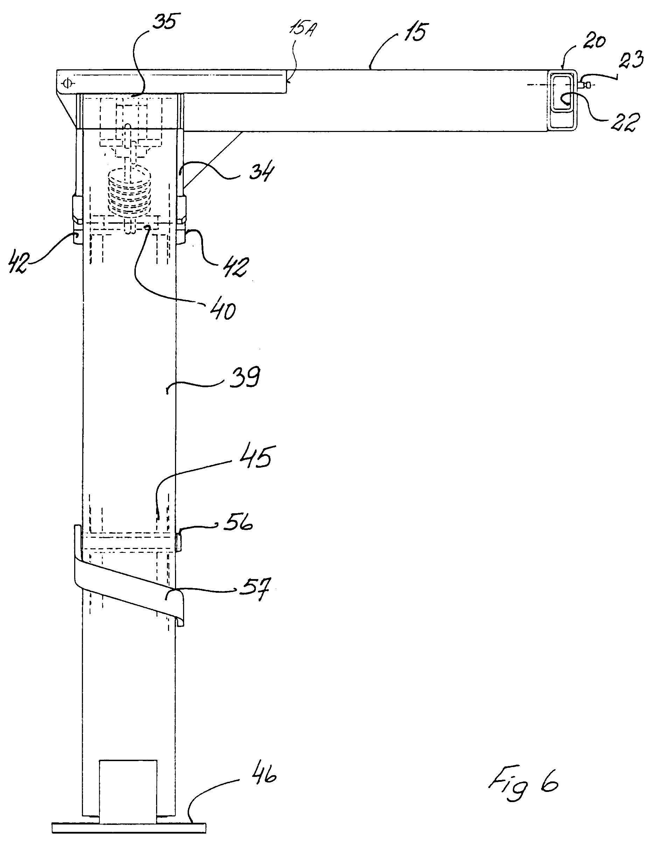

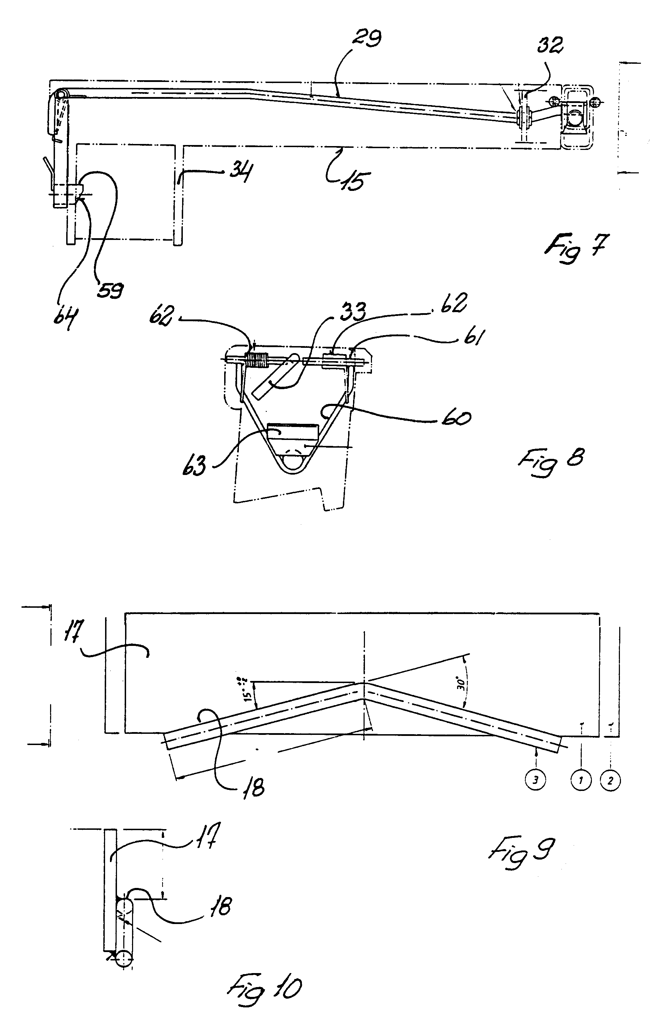

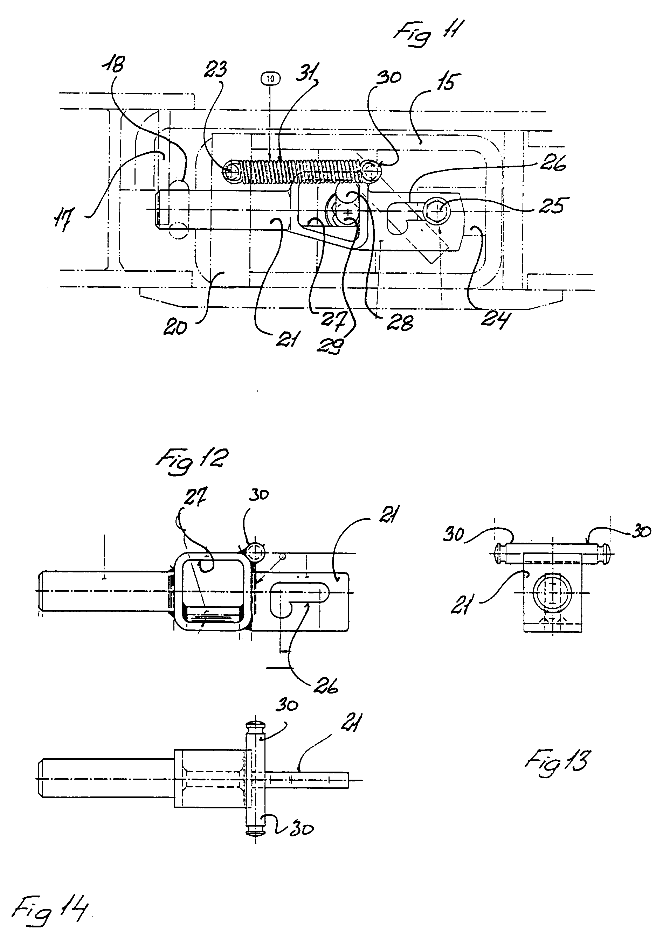

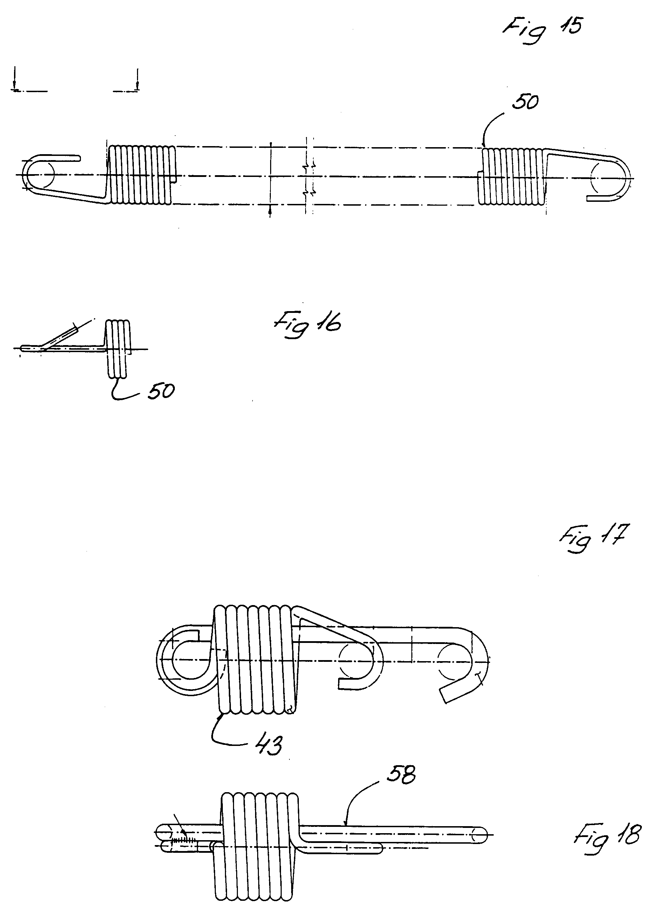

Fig. 6 shows a view in the direction of the arrow VI in Fig. 5 of the support leg and its sliding beam. Fig. 7 shows a view in the same direction as that of Fig. 6 of parts included in the sliding beam. Fig. 8 shows a view from the left in Fig. 7. Fig. 9 shows a front elevation of a locking plate for a crossbeam according to the present invention. Fig. 10 is an end elevation of the locking plate in Fig. 9. Fig. 11 is an end elevation from the right in Fig. 7 of one embodiment with a cast locking bar. Fig. 12 shows a similar view to that of Fig. 11 of one embodiment with a locking bar of separate parts welded together. Fig. 13 is an end elevation of the locking bar in Fig. 12. Fig. 14 is a top plan view of the locking bar of Fig. 12. Fig. 15 is a side elevation of a spring between the upper leg and the lower leg in an apparatus according to the present invention. Fig. 16 is a top plan view of one end of the spring of Fig. 15. Fig. 17 is a side elevation of a spring between the upper leg and a leg bracket in an apparatus according to the present invention. Fig. 18 is a top plan view of the spring shown in Fig. 17.

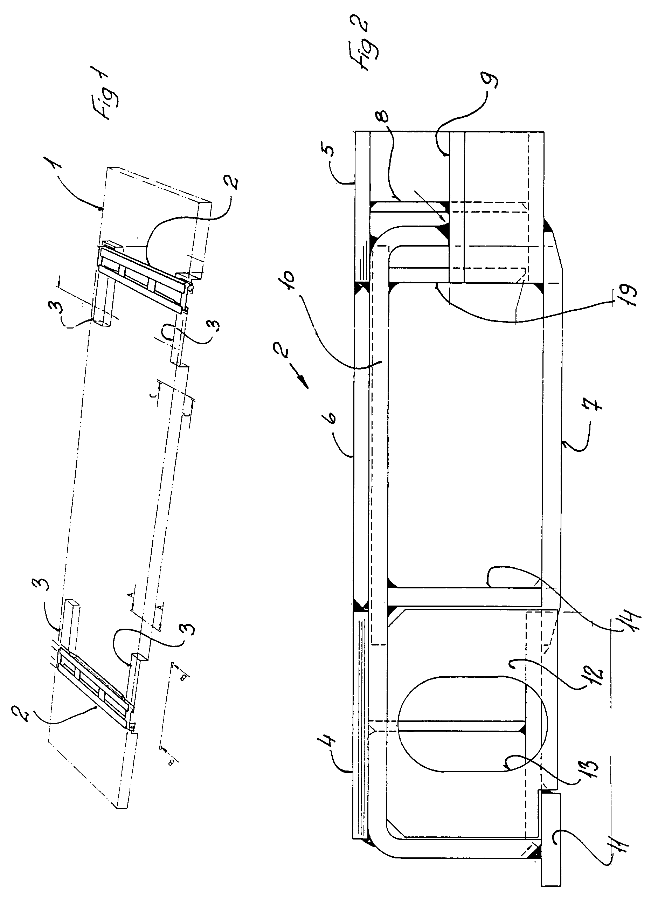

In Fig. 1, the contours of a load carrier frame 1 are shown by ghosted lines. The load carrier frame 1 has a crossbeam 2 at each end. At each end of the crossbeams 2, there are provided accommodation spaces 3 in the load carrier frame 1. The accommodation spaces 3 serve to accommodate an inwardly folded support leg with retracted lower leg. In most cases, the support legs are, in addition to being pivotal from the vertical position to a horizontal position in the accommodation spaces 3, also at least partly withdrawable out from the crossbeams 2 for achieving width and for permitting driving in and out of a vehicle of the same width as the load carrier frame 1.

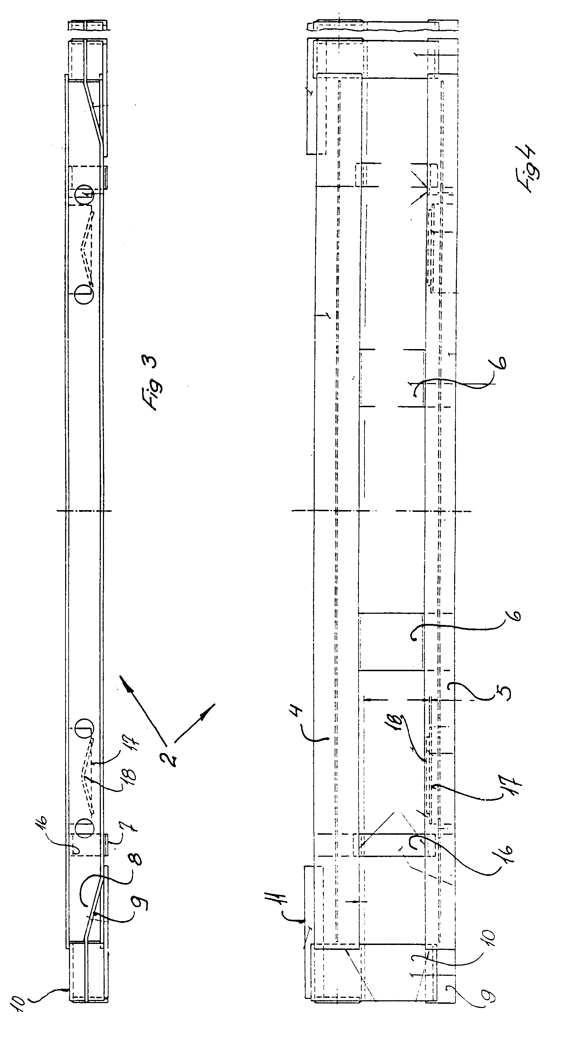

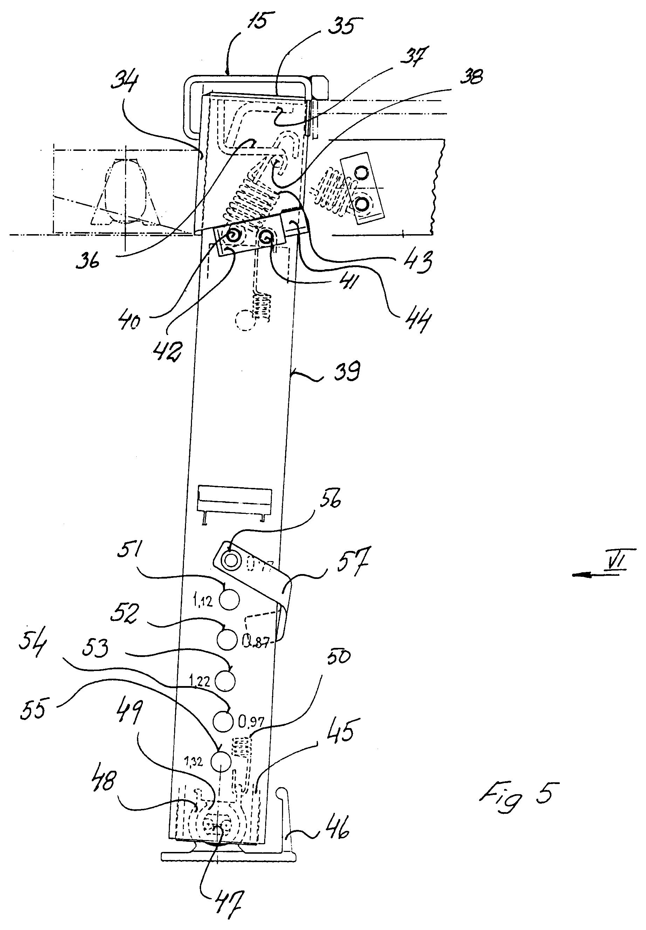

The crossbeam 2 according to the present invention may be mounted in principle in any optional type of load carrier frame 1 and is shown in greater detail in Figs. 2, 3 and 4. The crossbeam 2 is provided with two longitudinal I-beams 4 and 5 which are interconnected by means of upper crosspieces 6 and lower crosspieces 7. In order that the crossbeam 2 be able to extend all the way out into the accommodation space 3, the web 8 of the I-beam 5 is recessed at the ends, and the lower flange 9 is bent up to the web 8 and extends therefrom throughout the entire accommodation space 3. From the upper side of the flange 9, a crossplate 10 extends up to the upper I-beam 5 and thereafter across the space between the I-beams 4 and 5 and past the upper flange on the I-beam 4, whereafter the crossplate 10 is recurved at right angles down towards the lower flange of the I-beam 4 and is fixedly welded to a plate 11 extending along the lower flange. A corner box plate 12 is fixedly welded in the opening. The hole 13 in the plate 12 may be of desired type, a so-called standard sling hoist. On the underside of the plate, a vertical plate 14 A is welded for forming one edge of a space between the I-beams 4 and 5 for a sliding beam 15 in Fig. 6. Between the I-beams 4 and 5, there are disposed a crossplate 7, the crossplate 16 and an additional vertical plate 14 B in line with the vertical plate 14 A cooperating for the formation of the space for the sliding beam 15. A locking plate 17 which is shown in greater detail in Figs. 9 and 10 is fixedly welded to the underside of the inner face of the upper flange on the I beam 5. The locking plate 17 displays on its inner side a guide cam 18 which is disposed in line with a vertical portion 19 on the crossplate 16. This vertical portion 19 is included in the formation of the space for the sliding beam 15 and cooperates with the locking plate 17 for locking the sliding beam 15 in the desired, extended position. Naturally, the ends of the crossbeam 2 are of the same construction and the crossbeam 2 is symmetric about the ghosted line shown in Figs. 3 and 4.

The sliding beam 15 in Fig. 6 is, at the outer end of the crossbeam 2, guided by the parts 10, 14 A and 19, in the interior of the crossbeam 2 by the parts 7, 14 B, 16 and 19 and is, at the inner end, provided with a locking device which is illustrated in greater detail in Figs. 11-14. Insertion of the sliding beam 15 is greatly facilitated in that a portion 15 A extending along the beam 15 fits in the space between the upper side of the horizontally extending portion of the flange 9 and the plate 10, the lower edge of the portion 15 A resting and sliding on the above-mentioned part of the flange 9.

The locking device consists of a square tube portion 20 and an inner square tube portion 22 disposed therein for guiding a locking bar 21. On the tube portion 20, there are secured two spring bolts 23 in register with one another, although only one is shown in Fig. 6. As will be apparent from Fig. 11, the sliding beam 15 is in the form of a recumbent square tube. The locking bar 21 is secured on a lug 24 by means of a bolt 25 which extends through a recess 26 in the locking bar 21. At its one end, the recess 26 is flared so as to be able to catch on the bolt 25. Approximately centrally, the locking bar 21 is provided with a rectangular recess 27 for one end 28 of a rod 29 which is intended for operating the locking bar 21. The locking bar 21 is provided with substantially identical spring bolts 30 as the bolts 23, and springs 31 extend between the bolts 23 and 30. The springs 31 strive to retain the locking bar 21 in the position illustrated in Fig. 11, in which the tip of the locking bar 21 proper extends beyond the locking plate 17 with the guide cam 18. The bar 21 is displaceable from engagement with the locking plate 17 by means of the rod 29 which is shown in greater detail in Fig. 7 and which extends through a guide hole in a crosspiece 32 within the beam 15. At its outer, free end, the rod 29 is bent for forming a handle 33 (Fig. 8). On switching of the handle 33 from the position shown in Fig. 8 counterclockwise, the end 28 will displace the locking bar 21 from the position illustrated in Fig. 11 so that the tip of the bar 21 is free from the locking plate 17 and the end 28 will be retained in an above-centre position by the springs 31, and thereby the locking bar 21 in non-locking position, whereafter the sliding beam 15 may be displaced from its inner position to its outer position, or vice versa. During displacement past the locking plate 17, the locking bar 21 slides on the guide cam 18, which may consist of a bent wire, as is apparent in Figs. 9 and 10, and which forces the tip of the locking bar 21 upwards, whereby the locking of the locking bar 21 in the non-locking position is released so that the bar 21 projects out between the locking plate 17 and the check plate 19. If it is desired to remove the sliding beam 15 completely, the locking bar 21 may be caught in the flare of the recess 26, whereafter the sliding beam 15 may be displaced into and out of the crossbeam without being impeded by the locking bar 21.

The support leg proper is shown in greater detail in Figs. 5 and 6. A leg bracket 34 is mounted on the end of the sliding beam 15, the bracket being U-shaped and open towards the accommodation space 3 and the substrate. The leg bracket 34 has a top or lid 35 with a lower guide cam 36 and an upper guide cam 37. The guide cam 36 consists of two identical parts on either side of the guide cam 37, and a shaft 38 extends between the parts of the guide cam 36. After folding-in, the end of the upper leg 39 of the support leg will rest on the lower guide cam 36 and, on folding-out, the edge of the upper leg 39 will follow the upper guide cam 37 until the upper leg 39 is located in the correct position for contacting against the inside of the top or lid 35. The upper leg 39 is provided with a first shaft 40 and a second shaft 41. A checkplate 42 is disposed on the outer ends of these shafts 40 and 41, on either side of the upper leg 39. A spring 43 extends between the shaft 38 and the shaft 40. The lower edge of the leg bracket 34 is designed for cooperation with the checkplate 42 and has, at the one end, a locking heel 44 for direct cooperation with the checkplate 42. The checkplate 42 will slide on the locking heel 44 on folding-out and folding-in of the leg, a clearance being thereby created between the upper edge of the upper leg 39 and the guide cam 37.

It is clearly apparent from Fig. 5 that the spring 43 draws the upper leg 39 in a direction towards the illustrated position with the locking devices 42, 44 in engagement with each other. The spring 43 is shown in greater detail in Figs. 17 and 18. A lower leg 45 is inserted in the upper leg 39. The lower leg 45 is provided with a footplate 46 which is pivotal about a shaft 47 which extends within the end of the lower leg 45. The footplate 46 is provided with a bracket 48 which extends about the shaft 47 with an interlay of a bushing 49 of suitable material so as to permit a certain pivoting of the footplate 46 about the shaft 47. A long draft spring 50 extends between the bracket 48 and the shaft 41 and strives to hold the lower leg 45 inserted in the upper leg 39. A number of mutually aligned holes 51-55 are provided in the upper leg 39 and the lower leg 45, in which holes a pin 56 is insertable for fixing of the position between the upper leg 39 and the lower leg 45. The pin 56 has a handle 57 which is bent over the upper leg 39 for preventing unintentional removal of the pin 56, and which will, by its own weight, assume the position illustrated in Fig. 5 locking against withdrawal of the pin 56. The holes 51-55 and those holes in which the pin 56 is placed are located in the upper leg, and a corresponding lower hole A and corresponding upper hole B in the lower leg 39 naturally serve for realising a suitable length of the support leg formed by the upper leg 39 and the lower leg 45. These holes make for an unbroken series of support leg lengths of 550 mm if the spacing between the holes is 50 mm. The spring 50 is shown in greater detail in Figs. 15 and 16, while the spring 43 is shown in greater detail in Figs. 17 and 18 and has a spring portion 43 and a fixed portion 58. The fixed portion 58 is secured to the spring 43 at the one end and extends through the spring portion 43 and past its opposing end, whereby the fixed portion 58 will serve as a withdrawal or overload limiter. In this way, overloading and fatigue of the spring 43 will largely be prevented.

For further securement of the support leg in the position illustrated in Fig. 5, an additional locking pin 59 is provided, this pin extending through the wall of the leg bracket 34 into a hole in the upper leg 39 aligned with the pin, and which is secured on the end of a handle 60 which is pivotal about a shaft 61 at the upper, outer end of the sliding beam 15. Springs 62 are disposed between the shaft 61 and the handle 60 and urge the handle and the pin 59 in a direction towards the locking position illustrated in Fig. 7. A plate 63 is provided for facilitating outward pivoting of the handle 60 and thereby the locking pin 59. The inner end of the locking pin 59 is provided with a bevel 64 for cooperation with the edge of the upper leg 39 on folding thereof to the position illustrated in Fig. 5 for pivoting the locking pin 59 without the need for it to be manually operated in that the handle 60 is grasped and turned with the aid of the plate 63 out from the position illustrated in Fig. 7.

Pull-out locks are further provided in the accommodation spaces 3 for cooperation with the handle (upwardly directed in Fig. 5) on the footplate 46 for fixedly retaining the support leg raised to the horizontal position.

The bushing 49 which permits pivoting of the footplate 46 about the shaft 47 may consist of any suitable elastomer material, eg adeprene. Furthermore, the spring 43 may possibly be substituted by a suitable type of gas spring.

The apparatus according to the present invention may be manufactured from aluminium without the need for welding stages, for which reason a leg according to the invention may be of such light weight as 50 kg and even less. Furthermore, the leg bracket 34 is common to several different types of legs, and the legs are extremely easy to change, since only the spring 43 needs to be unhooked for complete release of the leg from the bracket 34. Other legs can be of any optional design and construction whatever, as long as the upper portion fits in the bracket 34 and it displays the spring 43, the shafts 40, 41 and the check or dead plate 42 and locking heel 44.

Many additional modifications are naturally conceivable without departing from the scope of the inventive concept as defined in the appended Claims.

## Claims

1. An apparatus with from a substantially horizontal (retracted) position to a substantially vertical (extended) position pivotable support legs (39, 45) for a load carrier frame (1) in demountable bodies and the like, the support legs including at least two mutually telescopically shiftable parts in the form of an upper leg (39) and a lower leg (45), said load carrier frame (1) is provided with at least one forward and one rear crossbeam (2) each for two sliding beams (15) telescopically shiftable in the longitudinal direction of the crossbeam (2) and each with a bracket (34) for the upper leg (39) and the therin telescopically insertable lower leg (45); said bracket (34) is provided with a guiding means (36, 37) **characterized in that** said bracket (34) is provided with a first cam part (37) against which the end of the upper leg (39) is guided and is sliding during retraction and extention movement, and a second substantially horisontal part (36), on which the end of the upper leg (39) is resting in the retracted position; **that** a spring (43) is disposed between the bracket (34) and the upper leg (39) for movably retaining the leg (39, 45) in the bracket (34), both in the retracted position of the leg (39, 45) and the extended, substantially vertical position of the leg (39, 45); **and that** the bracket (34) and the upper leg (39) are provided with cooperating locking means (42, 44) for preventing unintentional retraction of the leg (39, 45) from the extended, substantially vertical position.

2. The apparatus as claimed in Claim 1, **characterized in that** locking means (17, 18, 21) are disposed at the inner end of the sliding beam (15) for locking thereof in different positions in relation to the crossbeam (2).

3. The apparatus as claimed in Claim 2, **characterized in that** said locking means include a locking bar (21) switchable by means of a lever (29) at the opposing end of the sliding beam (15) in relation to said locking means, said locking bar being spring-biassed towards a projecting position for cooperation with a locking plate (17) in the crossbeam (2) in the retracted position of the sliding beam (15) and the locking plate (17), and a check plate (16) in the protracted position of the sliding beam (15).

4. The apparatus as claimed in Claim 3, **characterized in that** the locking bar (21) has a recess (26) for locking the locking bar (21) in the retracted position so as to permit complete and unimpeded removal of the sliding beam (15) and thereby removal of the leg (39, 45) mounted thereon from the crossbeam (2) and the frame (1).

5. The apparatus as claimed in Claim 1, **characterized in that** the spring (43) between the bracket (34) and the upper leg (39) is secured between a shaft (38) on the guide cam (36) in the bracket (34) and a shaft (40) at the upper end of the upper leg (39) and has a spring portion (43) and a fixed portion (58) which restrict the maximum extension of the spring portion (43) and thereby prevent overloading of the spring.

6. The apparatus as claimed in Claim 1, **characterized in that** the lower leg (45) is insertable in the upper leg (39) with the aid of a spring (50) and is, at the lower end, provided with a footplate (46) which is pivotal about at least one shaft (47) for adaptation to the substrate.

7. The apparatus as claimed in Claim 1, **characterized in that** a check bar (59) is mounted on a pivotal handle (60) for switching to and from a position in which the check bar (59) extends through both the wall of the leg bracket (34) and the wall of the upper leg (39) and forms an extra precaution against unintentional retraction of the leg.

8. The apparatus as claimed in Claim 1, **characterized in that** a series of mutually aligned holes (51-55) is provided in the upper leg (39) in two opposing walls, and a first hole (A) and a second hole (B) in two opposing walls of the lower leg (45) for cooperation with the holes (51-55) in the upper leg (39); and that the spacing between the holes (51-55) in the series in the upper leg (39) and the distance between the holes in the lower leg (45) are adapted so as to realise an unbroken series of lengths of the support leg formed by the upper leg (39) and the lower leg (45) of almost twice the series length.

## Patentansprüche

1. Vorrichtung mit aus einer im wesentlichen horizontalen (eingezogenen) Position in eine im wesentlichen vertikale (ausgefahrene) Position schwenkbaren Stützständern (39, 45) für ein Lastträgergestell (1) in abnehmbaren Aufbauten und ähnlichem, wobei die Stützständer wenigstens zwei teleskopisch ineinander verschiebbare Teile in der Form eines oberen Ständers (39) und eines unteren Ständers (45) aufweisen, wobei das genannte Lastträgergestell (1) mit wenigstens einem vorderen und einem hinteren Querträger (2) für jeweils zwei Gleitträger (15), die teleskopisch in Längsrichtung des Querträgers (2) verschiebbar sind, und jeweils mit einer Halterung (34) für den oberen Ständer (39) und den teleskopisch in diesen einsetzbaren unteren Ständer (45) versehen sind, wobei die genannte Halterung (34) mit Führungsmitteln (36, 37) ausgestattet ist, **dadurch gekennzeichnet**, daß die genannte Halterung (34) mit einem ersten Nockenteil (37), an dem entlang das Ende des oberen Ständers (39) geführt wird und während der Einzieh- und der Ausfahrbewegung gleitet, und einem zweiten, im wesentlichen horizontalen Teil (36) versehen ist, auf dem das Ende des oberen Ständers (39) in der eingezogenen Position liegt; **dadurch**, daß eine Feder (43) zwischen der Halterung (34) und dem oberen Ständer (39) angeordnet ist, um den Ständer (39, 45) beweglich sowohl in der eingezogenen Position des Ständers (39, 45) als auch in der ausgefahrenen, im wesentlichen vertikalen Position des Ständers (39, 45) in der Halterung (34) festzuhalten; **und dadurch**, daß die Halterung (34) und der obere Ständer (39) mit zusammenwirkenden Verriegelungsmitteln (42, 44) ausgestattet sind, um ein versehentliches Einziehen des Ständers (39, 45) aus der ausgefahrenen, im wesentlichen vertikalen Position zu verhindern.

2. Vorrichtung nach Anspruch 1, **dadurch gekennzeichnet**, daß Verriegelungsmittel (17, 18, 21) am inneren Ende des Gleitträgers (15) angeordnet sind, um diesen in verschiedenen Positionen in bezug auf den Querträger (2) zu verriegeln.

3. Vorrichtung nach Anspruch 2, **dadurch gekennzeichnet**, daß die genannten Verriegelungsmittel einen Riegel (21) beinhalten, der mit Hilfe eines Hebels (29) am gegenüberliegenden Ende des Gleitträgers (15) in bezug auf die genannten Verriegelungsmittel umstellbar ist, wobei der genannte Riegel zu einer hervorstehenden Position hin federgespannt ist, um in der eingezogenen Position des Gleitträgers (15) mit einer Verriegelungsplatte (17) in dem Querträger (2) und in der ausgefahrenen Position des Gleitträgers (15) mit der Verriegelungsplatte (17) und einer Sperrplatte (16) zusammenzuwirken.

4. Vorrichtung nach Anspruch 3, **dadurch gekennzeichnet**, daß der Riegel (21) eine Aussparung (26) zur Verriegelung des Riegels (21) in der eingezogenen Position aufweist, um eine vollständige und ungehinderte Entfernung des Gleitträgers (15) und somit eine Entfernung des darauf montierten Ständers (39, 45) von dem Querträger (2) und dem Gestell (1) zu ermöglichen.

5. Vorrichtung nach Anspruch 1, **dadurch gekennzeichnet**, daß die Feder (43) zwischen der Halterung (34) und dem oberen Ständer (39) zwischen einer Welle (38) auf der Führungsnocke (36) in der Halterung (34) und einer Welle (40) am oberen Ende des oberen Ständers (39) befestigt ist und einen Federabschnitt (43) und einen festen Abschnitt (58) aufweist, der die maximale Streckung des Federteils (43) begrenzt und somit eine Überlastung der Feder verhindert.

6. Vorrichtung nach Anspruch 1, **dadurch gekennzeichnet**, daß der untere Ständer (45) mit Hilfe einer Feder (50) in den oberen Ständer (39) eingesetzt werden kann und am unteren Ende mit einer Fußplatte (46) ausgestattet ist, die zur Anpassung an den Untergrund um wenigstens eine Welle (47) schwenkbar ist.

7. Vorrichtung nach Anspruch 1, **dadurch gekennzeichnet**, daß ein Sperrstift (59) an einem Drehgriff (60) montiert ist, um in eine und aus einer Position umzustellen, in der der Sperrstift (59) durch die Wand der Ständerhalterung (34) und die Wand des oberen Ständers (39) verläuft und eine zusätzliche Vorsichtsmaßnahme gegen versehentliches Einziehen des Ständers darstellt.

8. Vorrichtung nach Anspruch 1, **dadurch gekennzeichnet**, daß in zwei gegenüberliegenden Wänden des oberen Ständers (39) eine Reihe von aufeinander ausgerichteten Löchern (51 bis 55) und in zwei gegenüberliegenden Wänden des unteren Ständers (45) ein erstes Loch (A) und ein zweites Loch (B) vorgesehen sind, die mit den Löchern (51 bis 55) im oberen Ständer (39) zusammenwirken, und dadurch, daß der Abstand zwischen den Löchern (51 bis 55) in der Reihe in dem oberen Ständer (39) und die Entfernung zwischen den Löchern in dem unteren Ständer (45) so gewählt sind, daß eine ununterbrochene Reihe von Längen des Stützständers, der sich aus dem oberen Ständer (39) und dem unteren Ständer (45) zusammensetzt, ermöglicht wird, die fast dem Zweifachen der Serienlänge entsprechen.

## Revendications

1. Appareil à béquilles-supports (39, 45) pouvant pivoter d'une position sensiblement horizontale (rétractée) en une position sensiblement verticale (en extension) pour un bâti porte-charge (1) en structures démontables et analogue, les béquilles-supports comportant au moins deux parties téléscopiques mutuellement mobiles sous la forme d'une béquille supérieure (39) et d'une béquille inférieure (45), le dit bâti porte-charge (1) est muni d'au moins une traverse avant et une arrière (2) chacune pour deux poutres coulissantes (15) téléscopiquement mobiles dans la direction longitudinale de la traverse (2) et chacune ayant un support (34) pour la béquille supérieure (39) et la béquille inférieure (45) pouvant y être téléscopiquement insérée; le dit support (34) est muni d'un moyen de guidage (36, 37), **caractérisé en ce que** le dit support (34) est muni d'une première pièce came (37) contre laquelle l'extrémité de la béquille supérieure (39) est guidée et coulisse durant le mouvement de rétraction et d'extension et d'une seconde pièce sensiblement horizontale (36) sur laquelle repose l'extrémité de la béquille supérieure (39) en position rétractée; **en ce que** un ressort (43) est placé entre le support (34) et la béquille supérieure (39) de sorte à retenir de façon mobile la béquille (39, 45) dans le support (34), tant dans la position rétractée de la béquille (39, 45) que dans la position en extension sensiblement verticale de la béquille (39, 45); **et en ce que** le support (34) et la béquille supérieure (39) sont munis de moins de blocage coopérants (42,44) destinés à empêcher une rétraction intempestive de la béquille (39, 45) de la position en extension sensiblement verticale.

2. Appareil selon la revendication 1, **caractérisé en ce que** des moyens de blocage (17, 18, 21) sont disposés à l'extrémité intérieure de la poutre coulissante (15) afin de bloquer celle-ci en différentes positions par rapport à la traverse (2).

3. Appareil selon la revendication 2, **caractérisé en ce que** les dits moyens de blocage comportent un verrou (21) pouvant être poussé au moyen d'un lever (29) à l'extrémité opposée de la poutre coulissante (15) par rapport aux dits moyens de blocage, le dit verrou étant poussé pár un ressort vers une position projetée de coopération avec une plaque de sûreté (17) dans la traverse (2) en position de rétraction de la poutre coulissante (15) et la plaque de sûreté (17), et une plaque d'arrêt (16) en la position prolongée de la poutre coulissante (15).

4. Appareil selon la revendication 3, **caractérisé en ce que** le verrou (21) comporte un évidement (26) devant bloquer le verrou (21) en position rétractée de sorte à permettre une dépose complète et sans entrave de la poutre coulissante (15) et par conséquent une dépose de la béquille (39, 45) montée sur celle-ci hors de la traverse (2) et du bâti (1).

5. Appareil selon la revendication 1, **caractérisé en ce que** le ressort (43) entre le support (34) et la béquille supérieure (39) est fixé entre un axe (38) sur la came de guidage (36) dans le support (34) et un axe (40) à l'extrémité supérieure de la béquille supérieure (39) et comporte une partie ressort (43) et une partie fixe (58) qui limite l'extension maximale de la partie ressort (43) et par conséquent évite la surcharge du ressort.

6. Appareil selon la revendication 1, **caractérisé en ce que** la béquille inférieure (45) peut être insérée dans la béquille supérieure (39) avec l'aide d'un ressort (50) et est munie, en l'extrémité inférieure, d'une plaque-socle (46) pouvant pivoter autour au moins d'un axe (47) à fin d'adaptation au substrat.

7. Appareil selon la revendication 1, **caractérisé en ce que** une cheville de blocage (59) est montée sur une poignée pivotable (60) pour entrer et quitter une position dans laquelle la cheville de blocage (59) se prolonge à travers tant la paroi du support de béquille (34) que la paroi de la béquille supérieure (39) et forme une mesure supplémentaire de précaution contre une rétraction intempestive de la béquille.

8. Appareil selon la revendication 1, **caractérisé en ce que** une série de trous mutuellement alignés (51-55) est prévue dans la béquille supérieure (39) en deux parois opposées et un premier trou (A) et un second trou (B) dans deux parois opposées de la béquille inférieure (45) pour la coopération avec les trous (51-55) dans la béquille supérieure (39); **et en ce que** l'espacement entre les trous (51-55) dans la série dans la béquille supérieure (39) et la distance entre les trous dans la béquille inférieure (45) sont adaptées de sorte à réaliser une série ininterrompue de longueurs de la béquille-support formée par la béquille supérieure (39) et la béquille inférieure (45) d'au moins le double de la longueur de la série.
